# EUROPEAN PATENT APPLICATION

(11) **EP 3 502 897 A1**
(43) Date of publication of application: **26.06.2019**
(21) Application number: 17306885.9
(22) Date of filing: 21.12.2017
(51) Int. Cl.: G06F 9/54

(54) **EFFICIENT COMMUNICATION OVERLAP BY RUNTIMES COLLABORATION**

(71) Applicant: Bull SAS, 78340 Les Clayes-sous-Bois (FR)
(72) Inventor: SERGENT, Marc, 38340 Voreppe (FR); DAGRADA, Mario, 38100 Grenoble (FR); PAPAURE, Guillaume, 38000 Grenoble (FR)
(74) Representative: Novagraaf Technologies

(57) **Abstract**

This invention relates to a method for communication between runtimes in a parallel computing environment, consisting in having a first runtime sending a message to a second runtime, wherein said second runtime exposes dynamically its state, so as to be able to receive said message as soon as said state is an idle state.

## Description

### FIELD OF THE INVENTION

The invention relates to the interaction between runtimes of software applications. In particular, it concerns the overlap between communication and computation for such runtimes.

### BACKGROUND OF THE INVENTION

The simultaneous use of networking and computing resources by overlapping communications with computations has become a major concern nowadays in high performance computing (HPC) scientific applications to scale to thousands of computing nodes.

To achieve that overlap, the popular MPI standard specifies non-blocking communication routines which allow to make communication progress in background, while the application carries on its computations. This MPI standard is for instance described in Message Passing Interface Forum, "MPI: A Message-Passing Interface Standard", version 3.1, 2015.

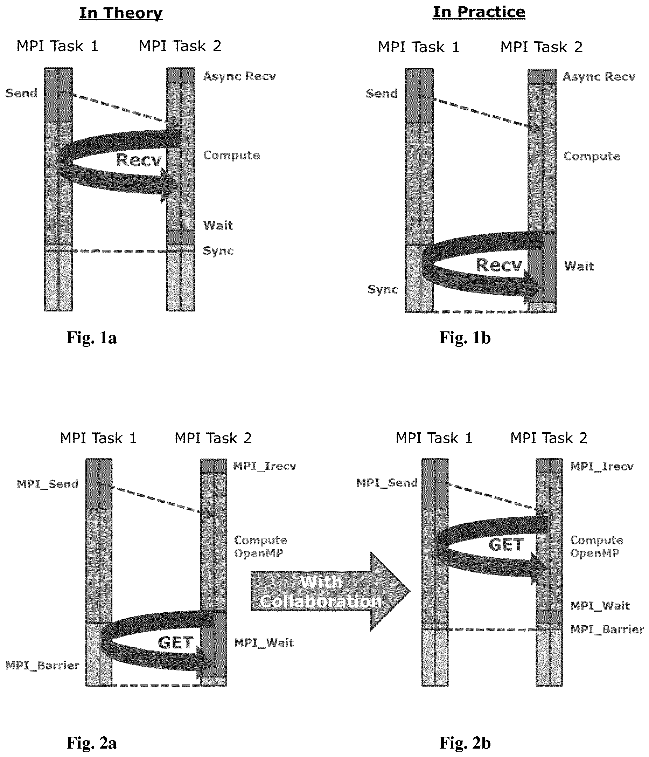

An example of communication and computation overlap is depicted in figures 1a and 1b.

Figure 1a depicts a theory situation wherein if a receiver requests to receive a piece of data asynchronously and starts computations, the matching sender should be able to perform the communication without needing further intervention from the receiver's side. However, figure 1b depicts a practical situation wherein the actual reception of the message only occurs when the MPI implementation is called, which is usually at the end of the computation step, when the receiver waits for the communication. This behavior greatly reduces the communication/computation overlap possibilities.

In practice, making non-blocking communication progress with MPI raises two issues: progression of communications and completion detection.

As discussed in R. Brightwell, R. Riesen, and K. D. Underwood, 'Analyzing the impact of overlap, offload, and independent progress for message passing interface applications', Int. J. High Perform. Comput. Appl., vol. 19, no. 2, pp. 103-117, 2005. the MPI-2 standard only defines in its Progress Rules how the implementation should address the completion of non-blocking communications and not how the implementation should make them progress. This statement leads to various ambiguities and different implementations of the background progress in practice.

A survey of communication and computation overlap techniques can be found in V. Cardellini, A. Fanfarillo, and S. Filippone, 'Overlapping communication with computation in MPI applications', Univ. Roma Tor Vergata Tech Rep DICII RR-1609, 2016.

Brightwell et al. distinguish several solutions to perform communication/computation overlap in the above-mentioned article.

The first one, called offload, is when the handling of communications is completely offloaded to a third party, which allows the host CPU to keep on performing computations. This third party is often a dedicated NIC (Network Interface Card) designed to independently handle communications, such as the Myrinet Quadrics, which is described in e.g. F. Petrini, W. Feng, A. Hoisie, S. Coll, and E. Frachtenberg, 'The Quadrics network: High-performance clustering technology', Ieee Micro, vol. 22, no. 1, pp. 46-57, 2002.

However, as discussed in T. Hoefler and A. Lumsdaine, 'Message progression in parallel computing-to thread or not to thread?', in Cluster Computing, 2008 IEEE International Conference on, 2008, pp. 213-222., some NICs do not leverage fully asynchronous communications, which partly breaks the independent progress. Indeed, they often cannot handle critical parts of the communication protocols that hugely impact performance. We can cite the message matching or the event queue handling, which are still performed by the host CPU. Some other NICs only provide a blocking network programming interface, which gives independent progress but no overlap.

Another solution to achieve overlap is to drive the network hardware with the host CPU, such that it launches asynchronous communications to the NIC before going back to computation. MPI implementations on top of RDMA-based networks such as InfiniBand often work like this. InfiniBand is described for instance in G. F. Pfister, 'An introduction to the infiniband architecture', High Perform. Mass Storage Parallel IO, vol. 42, pp. 617-632, 2001.

The main issue faced by these implementations is to efficiently detect the completion of communications. The problem here is twofold: the detection process should be lightweight to not disturb concurrent computations, and the detection should happen as close as possible to the actual completion of the communication.

At the MPI implementation level, the most popular solution is based on progress threads. This solution is heavily discussed in T. Hoefler and A. Lumsdaine, 'Message progression in parallel computing-to thread or not to thread?', in Cluster Computing, 2008 IEEE International Conference on, 2008, pp. 213-222.

Simply stated, a thread dedicated to make communications progress is spawned next to the application threads and run simultaneously with them. Since the application programmer is unaware of this thread's existence, a trade-off between reactivity and interference with the application threads should be applied by the MPI implementation.

The solution that favors reactivity is based on making the thread actively polling the network card, thus allowing a great reactivity to network events. This can however lead to a huge disturbance of computational threads if a careful thread scheduling is not performed. The Linux kernel scheduler tries not to favor the computational thread rather than the progress thread if they share a core during the execution, leading to huge interferences of the computational thread. That is why many MPI applications prefer losing some computational power by purposely leaving a free core per MPI process. This allows the Linux scheduler to bind the MPI progress thread to that core, which ultimately leads to better communication/computation overlap and better performance than oversubscribing a computing core with the progress thread. Another solution consists in detecting CPU idle times and scheduling the progress thread only during that time.

As described in F. Trahay and A. Denis, 'A scalable and generic task scheduling system for communication libraries', in Cluster Computing and Workshops, 2009. CLUSTER'09. IEEE International Conference on, 2009, pp. 1-8. the PIOMan communication interface applies the task scheduling idea to the communication progress: it divides the progress into small tasklets, which fit in the idle times without disturbing computations, and schedules them. However, there are performance concerns with that solution when using multiple threads, notably lock contentions, as discussed in another paper of the same authors: F. Trahay, E. Brunet, and A. Denis, 'An analysis of the impact of multi-threading on communication performance', in IEEE International Symposium on Parallel & Distributed Processing 2009,2009..

The solution that favors lightweight detection is based on network interruptions: when a message lands on the NIC, an interruption is raised by the card to the kernel, which reschedules the progress thread. Since the kernel is involved, this means that system calls and context switches are performed: this breaks the OS bypass properties of modern networks, needed to achieve performance. Moreover, there is no guarantee that the progress thread will be scheduled in the near future: it is just put in the run queue of the Linux scheduler. This can delay the reactivity up to a Linux timeslice (∼4ms), which is hardly acceptable from an application's perspective. It is possible to enforce the real-time priority on the progress thread to force the kernel to reschedule it as soon as it wakes up, but the worst scenario where network interruptions keep arriving as soon as the progress thread returns sleeping would provoke a starvation for the computational thread next to it.

Another way of thinking is to consider MPI processes as threads, which allows to use the strengths of MPI+X implementations without tampering with application codes. The literature calls these implementations thread-based MPI runtimes, or "unified" runtimes. A typical representative of this class is the MPC runtime, as discussed in M. Pérache, H. Jourdren, and R. Namyst, 'MPC: A unified parallel runtime for clusters of NUMA machines', Euro-Par 2008-Parallel Process., pp. 78-88, 2008; and M. Pérache, P. Carribault, and H. Jourdren, 'MPC-MPI: An MPI Implementation Reducing the Overall Memory Consumption.', PVM/MPI, vol. 9, pp. 94-103, 2009.

In this model, an MPI task can make communications progress for another MPI task which is located on the same physical node.

All these solutions of the state of the art are not satisfactory for several reasons, including that they are all heavily application-dependent. In an industrial context, however, the desired solution should be as little invasive as possible. In other words, the existing runtime systems should be kept as "black boxes" that are in charge of optimizing communications or computations for some resources of the computing nodes.

### SUMMARY OF THE INVENTION

The object of the present invention is to alleviate at least partly the above mentioned drawbacks. More particularly, the invention aims in having runtimes exposing their idle state and collaborate together.

This object is achieved with a method for communication between runtimes in a parallel computing environment, consisting in having a first runtime sending a message to a second runtime, wherein said second runtime exposes dynamically its state, so as to be able to receive said message as soon as said state is an idle state.

Preferred embodiments comprise one or more of the following features, which can be taken separately or together, either in partial combination or in full combination:
- said second runtime exposes its state through an OMPT interface;
- a tool handles events reported by said OMPT interface and calls an MPI progress when said even corresponds to an idle state;
- an idle state is exposed by "Idle State ompt_state_idle" event;
- said MPI progress is implemented by an "opal_progress()" or "MPI_Iprobe()".

Another object of the invention consists in a computer program product embodied on a non-transitory computer readable medium, comprising computer code for the communication between runtimes, in a parallel computing environment, consisting in having a first runtime sending a message to a second runtime, wherein said second runtime exposes dynamically its state, so as to be able to receive said message as soon as said state is an idle state.

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1a and 1b, already commented, show an example of communication and computation overlap
Fig. 2a and 2b show benchmark scenario both with prior art solution and according to an embodiment of the invention.
Fig. 3a and 3b show 2 scenarios for benchmarking the invention according to one of its embodiment.
Fig. 4, 5 and 6 show the distribution of the progress time, according to embodiements of the invention.

### DETAILED DESCRIPTION OF THE INVENTION

The core idea of the invention consists in having the runtime collaborating with each other, to negotiate the use of their respective idle times. For so doing, the runtime exposes information related to their idle time, to allow other runtime to take benefit of it.

Accordingly, while keeping their black-boxed properties, runtimes expose their idle times, which can then be used by other runtimes to make their internal operations progress if needed.

The use of these idle times should be negotiated between runtimes, instead of being only handled internally by each of them: runtimes should collaborate. If runtimes have to share resources, such as MPI+X applications which share computing resources for computation or driving communications, a third party could collect the idle times and intelligently arbitrate their use depending on the status of both runtimes, and eventually depending on the specifics of the application which is running, such as prefetching data to GPU accelerators if some kernels are GPU specific, or schedule tasks in advance in the context of task-based applications.

According to an embodiment of the invention, the exposition of the idle time of the runtimes is made thanks to the OMPT interface. This exposition can be made in several ways, but typically beginning and, possibly, ending of the idle period are sufficient to be reported.

Recent advances of the OpenMP standard includes the OpenMP Tools Profiling Interface (OMPT), which will be available in OpenMP 5.0.

This OMPT interface is described and defined on the OpenMP website (http://www.openmp.org) and especially in the documentation "OpenMP Technical report 2 on the OMPT interface" by A. Eichenberger et al.

This document can be retrieved at http://www.openmp.org/wp-content/uploads/ompt-tr2.pdf

According to Eichenberger A.E. et al. (2013) OMPT: An OpenMP Tools Application Programming Interface for Performance Analysis. In: Rendell A.P., Chapman B.M., Muller M.S. (eds) OpenMP in the Era of Low Power Devices and Accelerators. IWOMP 2013. Lecture Notes in Computer Science, vol 8122. Springer, Berlin, Heidelberg
"OMPT is a performance tools API for OpenMP. OMPT enables performance tools to gather useful performance information from applications with low overhead and to map this information back to a user-level view of applications. OMPT provides three principal capabilities:
   (1) runtime state tracking, which enables a sampling-based performance tool to understand what an application thread is doing,
   (2) callbacks and inquiry functions that enable sampling-based performance tools to attribute application performance to complete calling contexts, and
   (3) additional callback notifications that enable construction of more full-featured monitoring capabilities. "

This interface was primarily designed to profile the internals of OpenMP runtimes, needed by several HPC profilers such as HPCToolkit. This interface is based on standardized events which correspond to possible states of the OpenMP threads. The OMPT interface allows a tool to register functions that will be called as callbacks by the OpenMP runtime when the associated event is raised. By doing so, the OMPT interface tries to limit the overhead of the profiling in order not to change the dynamics of the profiled application.

In particular, the OMPT interface exposes begin/end events for several states of the OpenMP threads, including the "idle" state. An exhaustive list of events and thread states can be found in the official literature regarding OMPT, and especially the above-mentioned paper "OpenMP Technical report 2 on the OMPT interface" by A. Eichenberger et al.

According to this later documentation, an OpenMP runtime system should associate the activity of a thread at any point in time with a state, e.g., idle, which will enable a performance tool to interpret program behavior.

To enable a tool to understand what an OpenMP thread is doing, when a tool registers itself with an OpenMP runtime system, the runtime will maintain state information for each OpenMP thread that can be queried by the tool. The state maintained for each thread by the OpenMP runtime is an approximation of the thread's instantaneous state

The idle state is reported through the OMPT interface as:
"Idle State ompt_state_idle (mandatory)
The thread is idle while waiting to work on an OpenMP parallel region."

In a similar way than the profiling tools making use of the OMPT interface, a tool dedicated to runtime collaboration can be designed to handle the events reported by the OMPT interface. This tool can be named OMPTCP (OMPT for Collaborative Polling).

When an event "idle" is raised by the OpenMP runtime in OMPT, an MPI progress can be called. This MPI progress can be implemented by "opal_progress() with OpenMPI, or MPI_Iprobe() otherwise, for portability.

This OpenMPI is for instance discussed in E. Gabriel et al., "Open MPI: Goals, concepts, and design of a next generation MPI implementation", in European Parallel Virtual Machine / Message Passing Interface User's Group Meeting, 2004, pp. 97-104.

Thanks to the OMPT interface, the implementation of the OMPTCP tool can be extremely lightweight: 120 lines of C code. Moreover, since polling calls are only performed when OpenMP threads are idle, only little interference is expected with application threads while improving the communication/computation overlap.

To study the effectiveness of the proposed solution, the OMPTCP tool can be tested on a micro-benchmark designed to exhibit the progress problem. The inventors particularly focus the study on the overhead of the OMPTCP tool in terms of cost of calling the MPI progress and of application threads' disturbance, which are the usual drawbacks of state-of-the-art solutions.

This benchmark scenario is presented in Figures 2a and23b. This scenario is representative of bulk-synchronous parallel programming schemes, which are widely used patterns in parallel computations. Such schemes are described for instance in L. G. Vailiant, "A bridging model for parallel computation", Commun. ACM, vol. 33, no. 8, pp. 103-111, 1990.

The micro-benchmark is composed of pairs of processes, sender and receiver, which execute three main steps:
1. Initiate non-blocking communications;
2. Compute with OpenMP;
3. Collect communications and synchronize.

This scenario is designed to force a communication reception during computations. If no progress is performed, the reception happens at the end of the computation step, as shown in figure 2a.

With OMPTCP, we observe instead the scenario depicted in figure 2b, wherein the progress happens during OpenMP computations.

The sent buffer is big enough (8MiB in a case implemented by the inventors) to force the use of rendezvous protocol. This way, one ensures that the complete message is not sent in a single communication using the MPI implementation's eager protocol, and one force subsequent RDMA gets to be emitted by the receiver.

After synchronizing both MPI tasks with an MPI_Barrier, one forces the sender MPI task to delay the sending of the message by making it sleep for 500 ms before sending the message. This ensures that the receiver MPI task has started its OpenMP computation timeframe before the message reaches it.

To emulate a perfectly balanced application in terms of computations, the OpenMP computation step is implemented as a sleep for all OpenMP. An important point to notice is that sleeping OpenMP threads are not considered idle by the OpenMP runtime. The MPI progress is thus not called by the OMPTCP tool during sleep times, only during idle times for the OpenMP runtime.

Finally, OpenMP threads sleeps 1.5 seconds for the sender MPI task and 2 seconds for the receiver one. With the offset of 500ms on the sender side, one thus expects both MPI tasks to smoothly synchronize themselves at MPI_Barrier time if the communication has been correctly overlapped with computation at receiver's side.

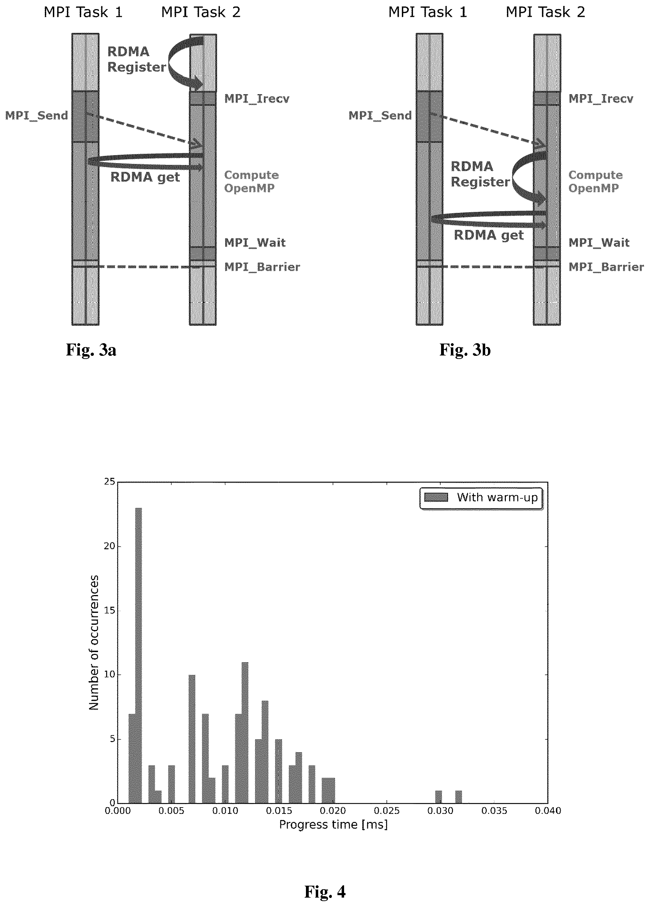

The inventors differentiate two scenarios for this micro-benchmark that are shown in Figures 3a and 3b.

In the first one, depicted in figure 3a, communication buffers have been warmed up before communicating, and are reused for each communication. This pattern is commonly used in stencil computations, where halo exchanges occur between processes. The halo buffers are allocated at the beginning of the application and reused to communicate.

In the second one, depicted on figure 3b, communication buffers have not been warmed up. This means that the MPI runtime has to register the corresponding memory region before each communication, which takes a lot of time (∼30-40ms according to observations). This pattern can be found in irregular computations with unstructured datatypes such as sparse linear algebra, where the communication buffer is usually built from the numerical content of the sparse matrix before each communication phase.

**Table 1: Time spent in MPI routines in both scenarios**

| Average time spent in MPI routines [s] | With warm-up | Without warm-up |
|---|---|---|
| w/o collaboration | 0.22107 | 0.53605 |
| w/ collaboration | 0.17114 | 0.28551 |
| Time saved in MPI | 0.04993 (23%) | 0.25054 (47%) |

The inventors report in Table 1 the average time spent in the MPI routines of the micro-benchmark (Send, Irecv, Wait and Barrier). If the library allows communication/computation overlap, the time spent in MPI_Wait routine should reduce and we should observe a reduction in the time spent in MPI routines. The table shows that the time spent in MPI routines indeed reduces in both cases, from 23 to 46%, which confirms the hypothesis.

**Table 2: Total execution time in both scenarios**

| Average total execution time [s] | With warm-up | Without warm-up |
|---|---|---|
| w/o collaboration | 20.268893 | 20.555101 |
| w/ collaboration | 20.221282 | 20.523211 |
| Execution time saved | 0.047611 | 0.031910 |
| Percentage of time saved in MPI | 95% | 13 % |
| Max. time spent in a progress call | 0.000032 | 0.04088 |

The inventors then want to ensure that the time saved in MPI routines actually results in a total execution time gain. It is thus reported in Table 2 the average execution time of the micro-benchmark. Since 10 iterations of 2 seconds each are run, the inventors expect a total execution time close to 20 seconds, which is the case. However, they observe that, while the time saved in MPI routines almost completely translates into a gain in execution time with warm-up, only 13% of this time is gained without warm-up. They explore and discuss the cause of this inefficiency in the next paragraphs.

To understand why the time saved in MPI routines does not completely transfer into an execution time gain without warm-up, we postulated that calling the progress would have taken more time than the actual idle time available. This would prevent the OpenMP runtime from reclaiming threads that are calling the progress to perform computations, thus introducing imbalance between OpenMP threads.

To confirm this hypothesis, the inventors timed each call of the OMPTCP tool to the MPI progress, in both cases. The last line of Table 2 gives the time of the longest call to the progress made by the OMPTCP tool. With warm-up, the time spent in a progress does not exceed 30 µs, which is an order of magnitude less than the execution time saved. This means that the time spent calling the MPI progress is negligible compared to the amount of saved time. However, without warm-up, calling the MPI progress can take as much time as the amount of saved time. This means that the time saved by calling the progress can be erased by the cost of calling this progress, if the tool does not call it intelligently.

Going further, we study the distribution of the time spent calling the progress in both cases.

Figure 4 shows this distribution with warm-up, which confirms that calls to MPI progress are negligible in this case.

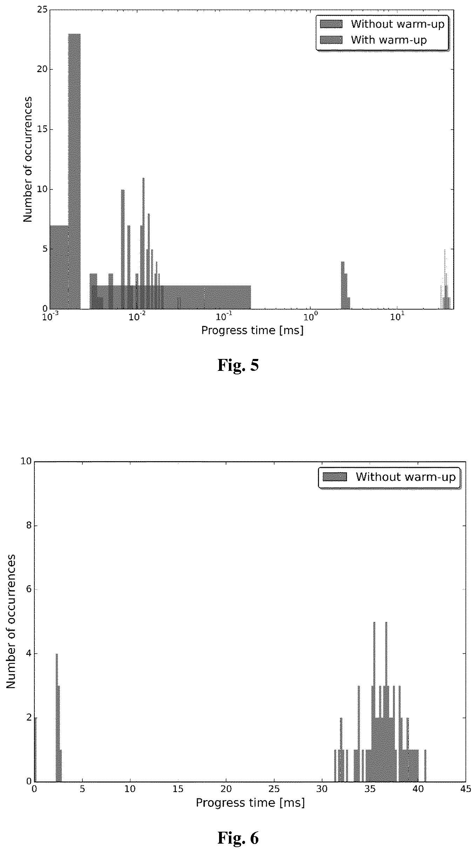

Figure 5 shows the distribution without warm-up. This time, the inventors observe two different behaviors: some of the progress calls actually behave like in the warm-up case (see Figure 6 for comparison), while the others take between 30 and 40 milliseconds to proceed. The inventors explain that behavior by the need of the MPI implementation to pin physical pages for the InfiniBand network, which is very costly.

In the context of the micro-benchmark, this means that an OpenMP thread that calls the progress when going idle can be blocked for up to 40 milliseconds in the OMPTCP tool. If the computation is perfectly balanced like the scenario postulates, an imbalance between OpenMP threads can appear and provoke performance losses due to late synchronization at the end of the OpenMP parallel section.

The OMPTCP tool disturbs the computation of OpenMP threads when the MPI runtime needs to perform synchronous operations, such as pinning physical pages for the InfiniBand network, which takes more time than the OpenMP runtime can give..

The inventors have proposed a new solution to the progress of non-blocking communications with MPI. This contribution is based on making runtimes share their idle times with others. An arbiter can then decide which runtime uses these idle times and for what purpose. They put that idea into practice with MPI+OpenMP applications with the OMPTCP tool, which calls the MPI progress when OpenMP threads are idle, thanks to the OpenMP Tools profiling interface. They have shown on a micro-benchmark representative of a widely used communication/computation overlap pattern that proposed solution allows to reduce the time spent in the MPI runtime from 25 to 45%.

The invention has been described with reference to preferred embodiments. However, many variations are possible within the scope of the invention.

## Claims

1. Method for communication between runtimes in a parallel computing environment, consisting in having a first runtime sending a message to a second runtime, wherein said second runtime exposes dynamically its state, so as to be able to receive said message as soon as said state is an idle state.

2. Method according to claim 1, wherein said second runtime exposes its state through an OMPT interface.

3. Method according to claim 2, wherein a tool handles events reported by said OMPT interface and calls an MPI progress when said even corresponds to an idle state.

4. Method according to claim 2 or 3, wherein an idle state is exposed by "Idle State ompt_state_idle" event.

5. Method according to claims 3, wherein said MPI progress is implemented by an "opal_progress()" or "MPI_Iprobe()" .

6. A computer program product embodied on a non-transitory computer readable medium, comprising computer code for the communication between runtimes, in a parallel computing environment, consisting in having a first runtime sending a message to a second runtime, wherein said second runtime exposes dynamically its state, so as to be able to receive said message as soon as said state is an idle state.
